# EUROPÄISCHE PATENTSCHRIFT

(11) **EP 1 123 674 B1**
(45) Veröffentlichungstag und Bekanntmachung des Hinweises auf die Patenterteilung: **27.10.2004**
(21) Anmeldenummer: 01101458.6
(22) Anmeldetag: 23.01.2001
(51) Int. Cl.: A47J 27/21

(54) **Behälter**
Container
Récipient

(30) Priorität: 08.02.2000 DE 10005450
(43) Veröffentlichungstag der Anmeldung: 16.08.2001
(73) Patentinhaber: BSH Bosch und Siemens Hausgeräte GmbH, 81739 München (DE)
(72) Erfinder: Kramer, Siegmund, 83417 Kirchanschöring (DE); Fränzel, Bernd, Dr.-Ing., 83301 Traunreut (DE)

(56) Entgegenhaltungen:
- EP-A- 1 048 255
- DE-U- 29 513 126
- DE-U- 29 710 464
- GB-A- 2 337 194

## Beschreibung

Die Erfindung geht aus von einem Behälter nach dem Oberbegriff des Anspruchs 1.

Bekannte Wasserkocher besitzen einen Behälter mit einem Grundkörper, der einen Behälterboden und eine Behälterwand aufweist. Der Behälter wird durch einen Tiefziehprozeß hergestellt. Am Behälterboden wird nach dem Tiefziehprozeß ein Heizelement befestigt, beispielsweise ein Rohrheizkörper.

Aus der GB 2337194 A ist ein Wasserkocher bekannt, an dessen Behälterwand restliche Funktionsmittel, wie z.B. Ausguss, angeformt werden.

Die Aufgabe der Erfindung besteht darin, einen gattungsgemäßen Behälter weiterzuentwickeln, insbesondere dessen Gestaltungsfreiheit zu erhöhen und dessen Herstellkosten zu senken. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einem Behälter mit einem Grundkörper, der zumindest einen Behälterboden und eine Behälterwand aufweist und der zumindest ein Heizelement besitzt.

Es wird vorgeschlagen, daß die Behälterwand des Grundkörper zumindest zwei über wenigstens eine Kontaktfläche verbundene Segmente aufweist, wodurch komplexe Behälterformen konstruktiv einfach und kostengünstig erreicht werden können. Die Segmente werden von getrennten Bauteilen gebildet, wodurch weitere Gestaltungsfreiheiten erreicht werden können, beispielsweise durch eine unterschiedliche Bearbeitung gleicher Materialien und/oder durch Verwendung unterschiedlicher Materialien usw.

In einer weiteren Ausgestaltung wird ferner vorgeschlagen, daß der Behälterboden von zumindest einem Bauteil gebildet und mit der Behälterwand über wenigstens eine Kontaktfläche verbunden ist. Es kann ein besonderes Design erreicht und insbesondere können der Behälterboden und die Behälterwand vorteilhaft unterschiedlichen Anforderungen gezielt angepaßt werden. Bei Behältern mit einem Dickschichtheizelement kann der Behälterboden durch eine große Materialstärke, beispielsweise größer/gleich 1,2 mm, vorteilhaft besonders starr ausgeführt und/oder es kann durch ein bestimmtes Material ein guter Stoffschluß zwischen dem Behälterboden und dem Dickschichtheizelement erreicht werden.

Heizelemente können am Grundkörper vor oder nach dem Verbinden der Segmente befestigt werden. Dickschichtheizelemente werden in der Regel pastenförmig aufgebracht und anschließend in einem Ofen eingebrannt. Wird der Behälter von einem ebenen, speziell zugeschnittenen Bauteil gebildet, das in einem späteren Prozeß verformt und an seinen Kontaktflächen dicht verbunden wird oder wird der Behälterboden von einem getrennten Bauteil gebildet, kann das Dickschichtheizelement vorteilhaft noch ohne Behälterwand auf dem Behälterboden aufgebracht und anschließend in von der Bauhöhe niedrigen und kostengünstigen Öfen eingebrannt werden. Zusätzliche Trägerplatten für Dickschichtheizelemente, Montageaufwand und Kosten können eingespart und es kann ein vorteilhafter Wärmeübergang vom Dickschichtheizelement an einen zu erwärmenden Stoff erreicht werden, beispielsweise an Wasser. Nach dem Einbrennen des Dickschichtheizelements kann eine hohe Behälterwand aus einem flachen, einstückig mit dem Behälterboden ausgeführten Teil, beispielsweise durch Biegen angeformt oder es kann eine als separates Bauteil ausgeführte Behälterwand mit dem Behälterboden verbunden werden. Wird die Behälterwand von einem separaten Bauteil gebildet, können eine große Anzahl an Behälterböden auf einer Fläche untergebracht und es kann mit kleinen Öfen eine große Stückzahl an Behälterböden gebrannt werden.

Ferner können Fertigungskosten eingespart werden, indem die Behälterwand aus zumindest einem gebogenen und anschließend über wenigstens eine Kontaktfläche zusammengefügten Bauteil gebildet ist, beispielsweise aus einem ebenen Blechteil, das zu einem Zylinder oder einem Kegelstumpf gebogen wird oder aus mehreren zu Schalen gebogenen Blechteilen.

Der Grundkörper kann aus verschiedenen, dem Fachmann als sinnvoll erscheinenden Materialien hergestellt werden, wie beispielsweise aus verschiedenen Metallen und/oder aus nichtmetallischen Werkstoffen, wie Kunststoff, Glas, Naturstein, Keramik usw., wobei verschiedene Materialien auch kombiniert werden können. Vorteilhaft weist der Grundkörper jedoch zumindest ein mit wenigstens einem Bauteil verbundenes Kunststoffteil auf. Mit einem oder mehreren Kunststoffteilen können aufwendige Formgebungen konstruktiv einfach und kostengünstig realisiert werden. Ferner kann ein Behälter mit einem kleinen Gewicht und einem besonderen Design erreicht werden.

Das Kunststoffteil kann über verschiedene, dem Fachmann als sinnvoll erscheinende kraftschlüssige, formschlüssige und/oder stoffschlüssige Verbindungen mit einem oder mehreren angrenzenden Bauteilen verbunden sein, und zwar mit oder ohne zusätzliche Dichtungselemente. In einer Ausgestaltung der Erfindung wird vorgeschlagen, daß zumindest ein Teil eines Bauteils des Grundkörpers von dem Kunststoffteil umspritzt ist, so daß beispielsweise eine Kunststoff-Metall-Verbundkonstruktion bzw. eine Mischbauweise aus Kunststoff mit einzelnen integrierten Metallteilen entsteht. Dabei können Thermoplaste im Spritzgießverfahren oder Duroplaste, beispielsweise duroplastische Formmassen und Gießharz, usw. verwendet werden. Zusätzliche Einzelteile können vermieden und der Montageaufwand und die Herstellkosten können reduziert werden. Durch eine spezielle Formgebung des zumindest teilweise umspritzten Bauteils kann vorteilhaft zusätzlich zu einem Stoffschluß ein Formschluß erreicht werden, beispielsweise durch einen an das Bauteil angeformten Rand, eine rauhe Oberfläche, durch Ausnehmung, durch Verformung usw.

Im Kunststoffteil können konstruktiv einfach und kostengünstig einzelne und vorteilhaft mehrere Funktionselemente integriert werden, wie besonders vorteilhaft Lagerstellen und/oder Verriegelungselemente für einen Behälterdeckel, einen Ein- und Ausschalter und/oder einen Haltegriff usw. Ferner kann konstruktiv einfach ein Ausguß an das Kunststoffteil mit angeformt werden. Zusätzliche Bauteile, Fertigungsaufwand, Montageaufwand und Kosten können eingespart werden.

In einer weiteren Ausgestaltung wird vorgeschlagen, daß zumindest ein Teil der Behälterwand aus Glas gebildet ist. Die Glasbehälterwand ist vorteilhaft über ein Kunststoffteil, insbesondere über ein Elastomer mit einem Metallbehälterboden verbunden, an dem ein Heizelement befestigt sein kann, beispielsweise ein Dickschichtheizelement. Mit einer Glasbehälterwand kann ein besonderes Design erreicht und es kann insbesondere von der Ferne erkannt werden, ob beispielsweise eine zu erwärmende Wassermenge bereits kocht. Mit der Glasbehälterwand kann vorteilhaft ein Kunststoffteil mit integrierten Funktionselementen kombiniert werden.

Die Segmente können über verschiedene, dem Fachmann als sinnvoll erscheinende kraftschlüssige, formschlüssige und/oder stoffschlüssige Verbindungen mit oder ohne spezielle Dichtelemente verbunden werden, wie beispielsweise durch Schweißen, Löten, Kleben, Bördeln, Falzen/Einrollen, Quetschen bzw. Verpressen, Einpressen, Vernieten, Verschrauben und/oder Verstiften usw. Besonders vorteilhaft sind jedoch insbesondere metallische Segmente durch Laserschweißen verbunden. Mit Laserschweißen kann eine eng begrenzte lokale Erhitzung erreicht und es kann eine thermische Belastung von angrenzenden Teilen vermieden werden, beispielsweise von Kunststoffteilen und/oder von bereits befestigten Heizelementen. Ferner können eine Nachbearbeitung von Schweißnähten und damit verbundene Kosten vermieden werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen erfindungsgemäßen Metallbehälter von hinten,
- Fig. 2: einen Schnitt entlang der Linie II-II in Fig. 1,
- Fig. 3: eine Ansicht des Metallbehälters aus Fig. 1 von vorne,
- Fig. 4: eine Variante nach Fig. 1,
- Fig. 5: einen Schnitt entlang der Linie V-V in Fig. 4,
- Fig. 6: einen Ausschnitt eines Schnitts entlang der Linie VI-VI in Fig. 5 und
- Fig. 7: eine Ansicht eines Behälters aus Fig. 4 von vorne.

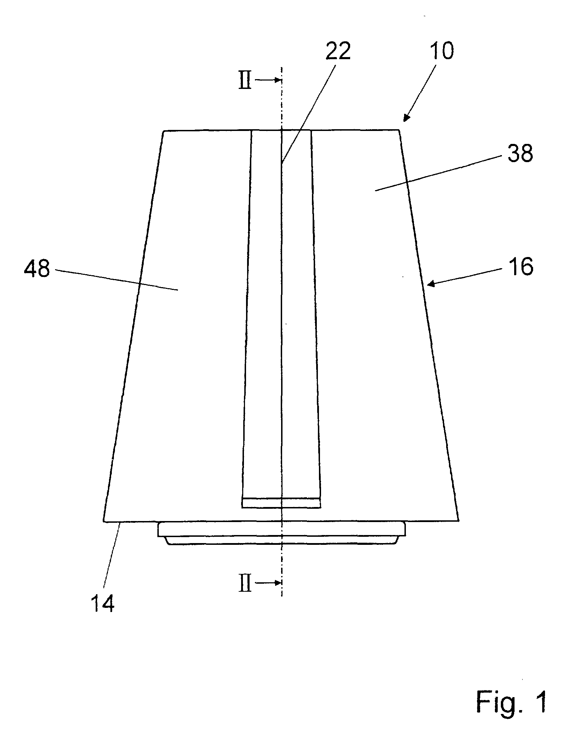

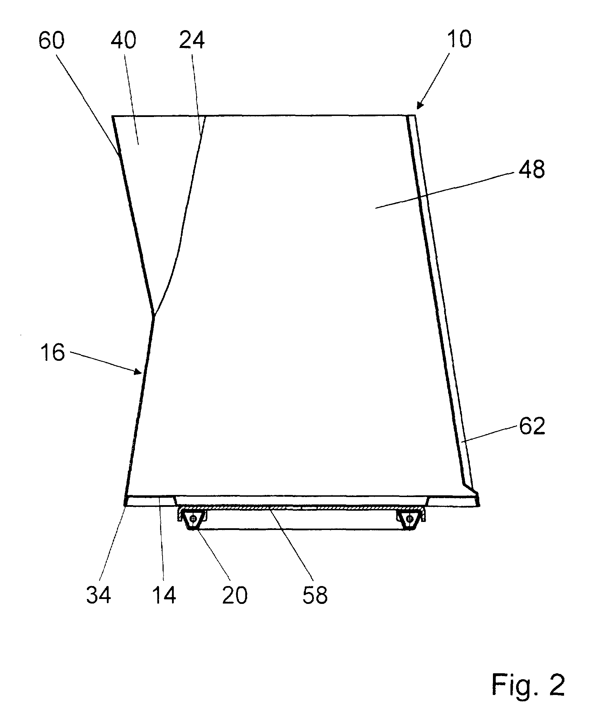

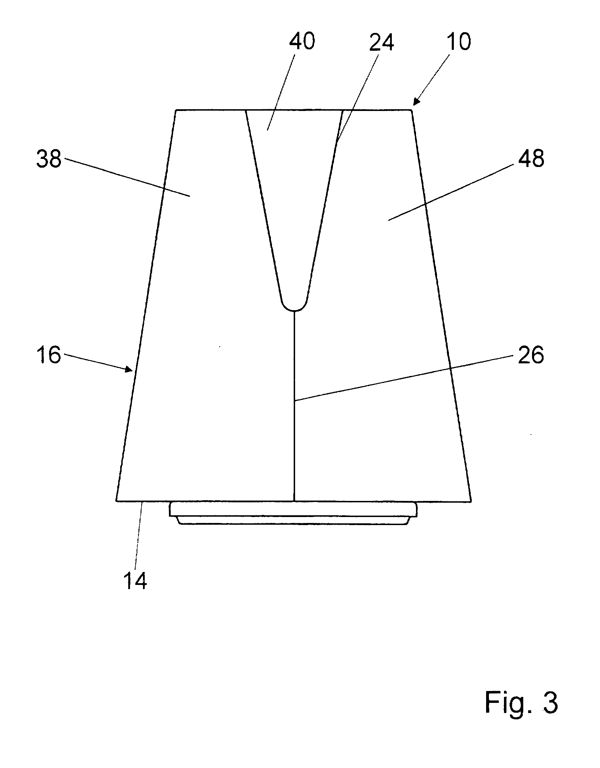

Fig. 1 bis 3 zeigen einen erfindungsgemäßen Edelstahlwasserkocher in verschiedenen Ansichten. Der Wasserkocher besitzt einen Behälter mit einem Grundkörper 10, der einen Behälterboden 14 und eine Behälterwand 16 aufweist. Am Behälterboden 14 ist auf der nach außen weisenden Seite des Behälters über eine Aluminiumplatte 58 ein Rohrheizkörper 20 befestigt.

Erfindungsgemäß besitzt der Grundkörper mehrere, von getrennten Bauteilen 14, 38, 40, 48 gebildete Segmente, die über Kontaktflächen 22, 24, 26, 34 verbunden sind. Die Behälterwand 16 wird aus drei Bauteilen 38, 40, 48 hergestellt, und zwar aus zwei zu Schalen gebogenen Bauteilen 38, 48 und aus einem zu einem Ausguß 60 gebogenen Bauteil 40. Die Bauteile 38, 40, 48 werden von Edelstahlblechen gebildet, die nach einem Biegevorgang durch Laserschweißen an ihren Kontaktflächen 22, 24, 26 dicht verbunden werden. Der Behälterboden 14 wird von einem runden Edelstahlblech gebildet. Nachdem die Aluminiumplatte 58 mit dem Rohrheizkörper 20 am Behälterboden 14 befestigt ist, wird der Behälterboden 14 an seiner Kontaktfläche 34 mit der Behälterwand 16 durch Laserschweißen dicht verbunden. Auf der dem Ausguß 60 abgewandten Seite ist ferner eine Vertiefung 62 in die Bauteile 38, 48 eingebracht. Mit einer nicht näher dargestellten Abdeckung kann ein Kanal erreicht werden, über den Dampf aus dem Behälter an einen Sensor geleitet werden kann, beispielsweise an eine Bimetallsensor.

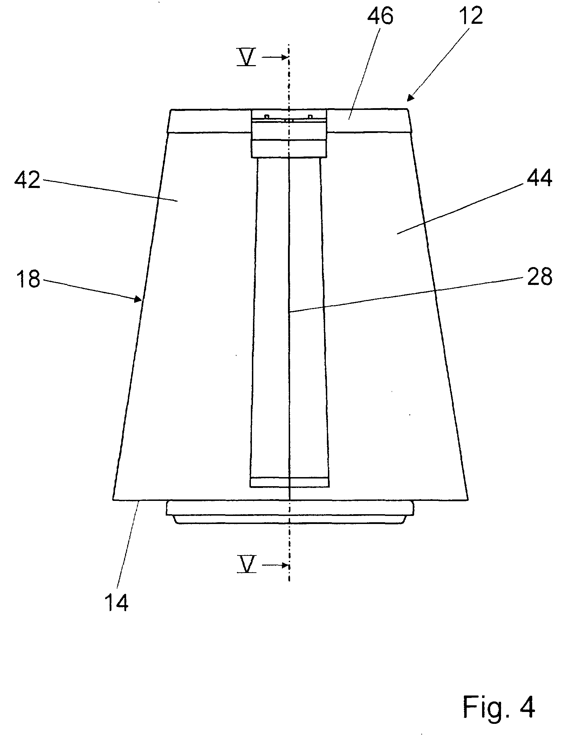

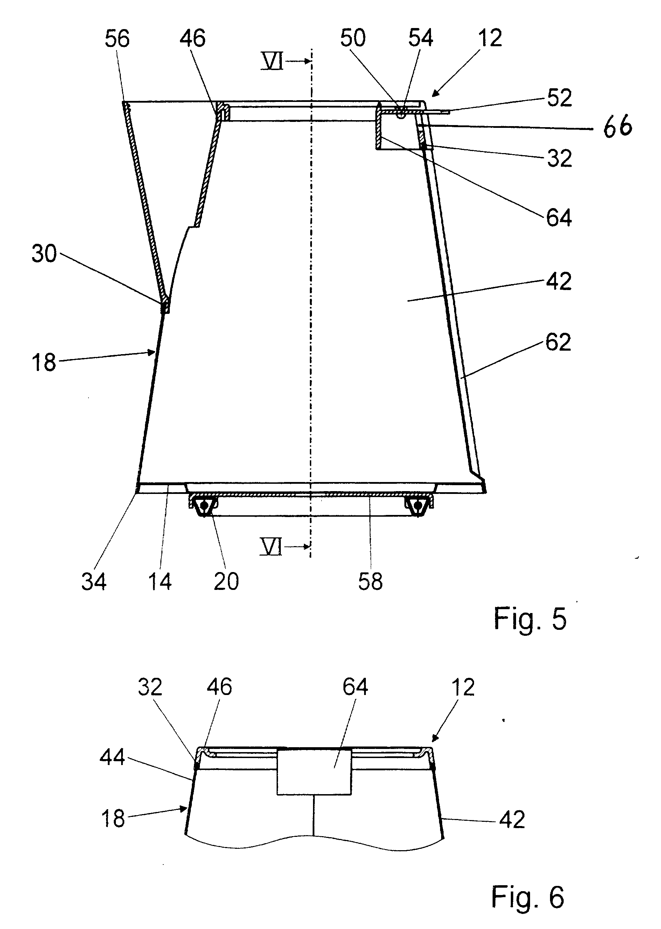

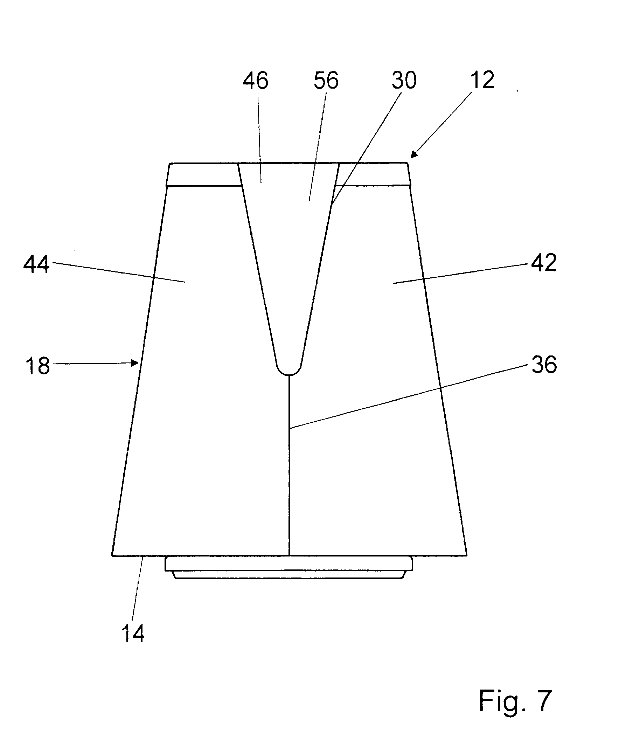

In den Fig. 4 bis 7 ist eine Variante zu dem in den Fig. 1 bis 3 dargestellten Wasserkocher dargestellt. Im wesentlichen gleichbleibende Bauteile sind grundsätzlich mit den gleichen Bezugszeichen beziffert. Der Wasserkocher besitzt einen Behälter mit einem Grundkörper 12, der einen Behälterboden 14 und eine Behälterwand 18 aufweist. Die Behälterwand 18 wird aus drei Bauteilen 42, 44, 46 hergestellt, und zwar aus zwei zu Schalen gebogenen Bauteilen 42, 44 aus Edelstahl und aus einem Kunststoffteil 46. Nachdem die Bauteile 42, 44 an ihren Kontaktflächen 28, 36 durch Laserschweißen dicht verbunden sind, werden diese an Kontaktflächen 30, 32 von dem Kunststoffteil 46 umspritzt. Im Kunststoffteil 46 sind eine Lagerstelle 50 für eine Schalterwippe für einen Ein- und Ausschalter, eine Lagerstelle 52 für einen Haltegriff und eine Lagerstelle 54 für einen Behälterdeckel mit angeformt. Ferner ist an das Kunststoffteil 46 ein Ausguß 56 und ein Stutzen 64 angeformt. Über den Stutzen 64 und eine Öffnung 66, die ebenfalls im Kunststoffteil eingeformt ist, kann Dampf in einen Kanal geleitet werden, der durch eine Vertiefung 62 und eine nicht näher dargestellte Abdeckung auf der dem Ausguß 56 abgewandten Seite gebildet ist. Das Kunststoffteil 46 bildet einen oberen Rand des Behälters und erzeugt dadurch ein besonderes Design.

Der Behälterboden 14 wird von einem runden Edelstahlblech gebildet. Nachdem eine Aluminiumplatte 58 mit einem Rohrheizkörper 20 am Behälterboden 14 befestigt ist, wird der Behälterboden 14 an seiner Kontaktfläche 34 mit der Behälterwand 18 durch Laserschweißen dicht verbunden.

## Patentansprüche

1. Behälter mit einem Grundkörper (10, 12), der zumindest einen Behälterboden (14) und eine Behälterwand (16, 18) aufweist und der zumindest ein Heizelement (20) besitzt, wobei die Behälterwand (16, 18) des Grundkörpers (10, 12) zumindest zwei über wenigstens eine Kontaktfläche (22, 24, 26, 28, 30, 32, 34, 36) verbundene Segmente aufweist, **dadurch gekennzeichnet, dass** die Segmente von getrennten Bauteilen (14, 38, 40, 42, 44, 46, 48) gebildet sind.

2. Behälter nach Anspruch 1, **dadurch gekennzeichnet, dass** zumindest zwei Segmente aus Metall bestehen.

3. Behälter nach Anspruch 2, **dadurch gekennzeichnet, dass** das Metall Edelstahl ist.

4. Behälter nach einem der Ansprüche 2 oder 3, **dadurch gekennzeichnet, dass** die Segmente durch Schweißen, Laserschweißen Löten, Kleben, Kitten, Bördeln, Falzen/Einrollen, Quetschen bzw. Verpressen, Einpressen, Vernieten, Verschrauben, Verstiften oder durch Umspritzen mit Kunststoff verbunden sind.

5. Behälter nach Anspruch 4, **dadurch gekennzeichnet, dass** die Verbindungsstellen optisch abgedeckt sind.

6. Behälter nach Anspruch 5, **dadurch gekennzeichnet, dass** die optischen Abdeckungen Funktions- oder Designelemente sind.

7. Behälter zumindest nach Anspruch 1, **dadurch gekennzeichnet, dass** der Behälterboden (14) von zumindest einem Bauteil gebildet und mit der Behälterwand (16, 18) über wenigstens eine Kontaktfläche (34) verbunden ist und die Behälterwand (16, 18) aus zumindest einem gebogenen und anschließend über wenigstens eine Kontaktfläche (22, 26, 28, 36) zusammengefügten Bauteil (38, 40, 42, 44, 46, 48) gebildet ist.

8. Behälter nach Anspruch 7, **dadurch gekennzeichnet, dass** auf den Behälterboden (14) ein Dickschichtheizelement aufgebracht ist.

9. Behälter nach einem der vorhergehenden Ansprüche, **dadurch gekennzeichnet, dass** zumindest ein Teil der Behälterwand aus Glas gebildet ist.

10. Behälter nach Anspruch 1, **dadurch gekennzeichnet, dass** der Grundkörper (12) zumindest ein mit wenigstens einem der Bauteile (42, 44) verbundenes Kunststoffteil (46) aufweist.

11. Behälter nach Anspruch 10, **dadurch gekennzeichnet, dass** zumindest ein Teil eines Bauteils (42, 44) des Grundkörpers (12) von dem Kunststoffteil (46) umspritzt ist.

12. Behälter nach Anspruch 10 oder 11, **dadurch gekennzeichnet, dass** im Kunststoffteil (46) zumindest eine Lagerstelle (50, 52, 54) für ein Bauteil integriert ist.

13. Behälter nach einem der Ansprüche 10 bis 12, **dadurch gekennzeichnet, dass** das Kunststoffteil (46) einen Ausguss (56) bildet.

14. Behälter nach Anspruch 10, **dadurch gekennzeichnet, dass** der Behälterboden (14) und die Behälterwand (16, 18) von jeweils zumindest einem Bauteil (14, 38, 40, 42, 44, 46, 48) gebildet sind, die über wenigstens eine Kontaktfläche (34) miteinander verbunden sind.

15. Behälter nach Anspruch 14, **dadurch gekennzeichnet, dass** auf den Behälterboden (14) ein Dickschichtheizelement aufgebracht ist.

## Claims

1. Container with a base body (10, 12), which comprises at least a container base (14) and a container wall (16, 18) and which has at least one heating element (20), wherein the container wall (16, 18) of the base body (10, 12) has at least two segments connected by way of at least one contact surface (22, 24, 26, 28, 30, 32, 34, 36), **characterised in that** the segments are formed by separate components (14, 38, 40, 42, 44, 46, 48).

2. Container according to claim 1, **characterised in that** at least two segments consist of metal.

3. Container according to claim 2, **characterised in that** the metal is stainless steel.

4. Container according to one of claims 2 and 3, **characterised in that** the segments are connected by welding, laser welding, soldering, gluing, cementing, flanging, folding/rolling-over, crushing or pressing, pressing-over, riveting, screwing or pinning or by injection moulding around with plastics material.

5. Container according to claim 4, **characterised in that** the connecting locations are optically covered.

6. Container according to claim 5, **characterised in that** the optical coverings are function or design elements.

7. Container at least according to claim 1, **characterised in that** the container base (14) is formed by at least one component and is connected with the container wall (16, 18) by way of at least one contact surface (34) and the container wall (16, 18) is formed from at least one bent component (38, 40, 42, 44, 46, 48) subsequently joined by way of at least one contact surface (22, 26, 28, 36).

8. Container according to claim 7, **characterised in that** a thick-film heating element is applied to the container base (14).

9. Container according to one of the preceding claims, **characterised in that** at least a part of the container wall is formed from glass.

10. Container according to claim 1, **characterised in that** the base body (12) comprises at least one plastics material part (46) connected with at least one of the components (42, 44).

11. Container according to claim 10, **characterised in that** at least a part of a component (42, 44) of the base body (12) is injection moulded around by the plastics material part (46).

12. Container according to claim 10 or 11, **characterised in that** at least one bearing point (50, 52, 54) for a component is integrated in the plastics material part (46).

13. Container according to one of claims 10 to 12, **characterised in that** the plastics material part (46) forms a spout (56).

14. Container according to claim 10, **characterised in that** the container base (14) and the container wall (16, 18) are each formed by at least one respective component (14, 38, 40, 42, 44, 46, 48), the components being connected together by way of at least one contact surface (34).

15. Container according to claim 14, **characterised in that** a thick-film heating element is applied to the container base (14).

## Revendications

1. Récipient muni d'un corps de base (10, 12), qui comporte au moins un fond de récipient (14) et une paroi de récipient (16, 18) et qui possède au moins un élément chauffant (20), la paroi de récipient (16, 18) du corps de base (10, 12) comportant au moins deux segments reliés par au moins une surface de contact (22, 24, 26, 28, 30, 32, 34, 36), **caractérisé en ce que** les segments sont formés par des composants séparés (14, 38, 40, 42, 44, 46, 48).

2. Récipient selon la revendication 1, **caractérisé en ce qu'**au moins deux segments sont composés de métal.

3. Récipient selon la revendication 2, **caractérisé en ce que** le métal est de l'acier spécial.

4. Récipient selon l'une des revendications 2 ou 3, **caractérisé en ce que** les segments sont reliés par soudage, soudage au laser, brasage, collage, cimentation, bordage, pliage/roulage, écrasement et/ou compression, injection, rivetage, boulonnage, goupillage ou par enrobage en matière synthétique.

5. Récipient selon la revendication 4, **caractérisé en ce que** les points de liaison sont recouverts optiquement.

6. Récipient selon la revendication 5, **caractérisé en ce que** les recouvrements optiques sont des éléments fonctionnels ou de design.

7. Récipient au moins selon la revendication 1, **caractérisé en ce que** le fond du récipient (14) est formé par au moins un composant et est relié à la paroi du récipient (16, 18) par au moins une surface de contact (34) et **en ce que** la paroi du récipient (16, 18) est formée d'au moins un composant (38, 40, 42, 44, 46, 48) cintré et assemblé ensuite par au moins une surface de contact (22, 26, 28, 36).

8. Récipient selon la revendication 7, **caractérisé en ce qu'**un élément chauffant à couche épaisse est déposé sur le fond du récipient (14).

9. Récipient selon l'une des revendications précédentes, **caractérisé en ce qu'**au moins une partie de la paroi du récipient est formée en verre.

10. Récipient selon la revendication 1, **caractérisé en ce que** le corps de base (12) comporte au moins une pièce en matière synthétique (46) reliée à au moins l'un des composants (42, 44).

11. Récipient selon la revendication 10, **caractérisé en ce qu'**au moins une partie d'un composant (42, 44) du corps de base (12) est enrobée d'une pièce en matière synthétique (46).

12. Récipient selon l'une des revendications 10 ou 11, **caractérisé en ce que** dans la partie en matière synthétique (46) au moins un point d'appui (50, 52, 54) est intégré pour un composant.

13. Récipient selon l'une des revendications 10 à 12, **caractérisé en ce que** la pièce en matière synthétique (46) forme un bec verseur (56).

14. Récipient selon la revendication 10, **caractérisé en ce que** le fond du récipient (14) et la paroi du récipient (16, 18) sont formés respectivement d'au moins un composant (14, 38, 40, 42, 44, 46, 48) qui sont reliés ensemble par au moins une surface de contact (34).

15. Récipient selon la revendication 14, **caractérisé en ce qu'**un élément chauffant à couche épaisse est déposé sur le fond du récipient (14).
